# EUROPÄISCHE PATENTANMELDUNG

(11) **EP 0 641 840 A1**
(43) Veröffentlichungstag der Anmeldung: **08.03.1995**
(21) Anmeldenummer: 94113364.7
(22) Anmeldetag: 26.08.1994
(51) Int. Cl.: C09B 62/245

(54) **Reaktivfarbstoffe**

(30) Priorität: 08.09.1993 DE 4330376
(71) Anmelder: BAYER AG, 51368 Leverkusen (DE)
(72) Erfinder: Henk, Hermann, Dr., D-51061 Köln (DE); Hansmann, Wilfried, D-51381 Leverkusen (DE)

(57) **Zusammenfassung**

Reaktivfarbstoffe der Formel 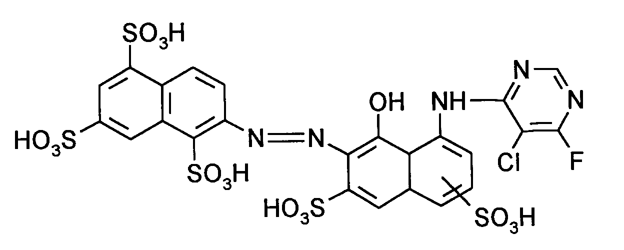
liefern auf hydroxyl- und amidgruppenhältigen Fasermaterialien hochechte blaustichige Rotfärbungen.

## Beschreibung

Die Erfindung betrifft neue Reaktivfarbstoffe, ihre Herstellung und Verwendung.

Reaktivfarbstoffe auf Basis von Azo-Chromophoren, die als Reaktivgruppe ein substituiertes Pyrimidin aufweisen, sind beispielsweise bekannt aus DE-A-1 644 203 und US-A-4 007 164. Die bekannten Reaktivfarbstoffe weisen zum Teil noch anwendungstechnische Nachteile auf.

Die vorliegende Erfindung betrifft Reaktivfarbstoffe der Formel 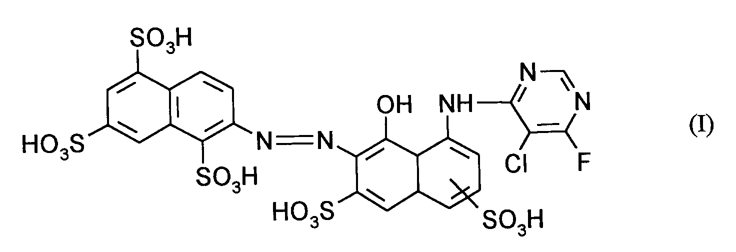
und deren Salze, insbesondere deren Alkali- oder Ammoniumsalze.

Die Formel (I) gibt die sulfogruppenhaltigen Farbstoffe in Form der freien Säuren an.

Die Herstellung der Farbstoffe I erfolgt beispielsweise nach folgenden Verfahren:
1. Durch Kondensation einer Reaktivkomponente der allgemeinen Formel 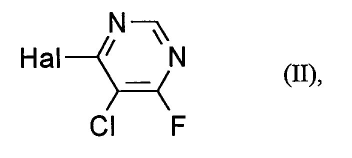 in der
   - Hal: für Chlor oder Fluor steht,
   mit einem Aminoazofarbstoff der allgemeinen Formel 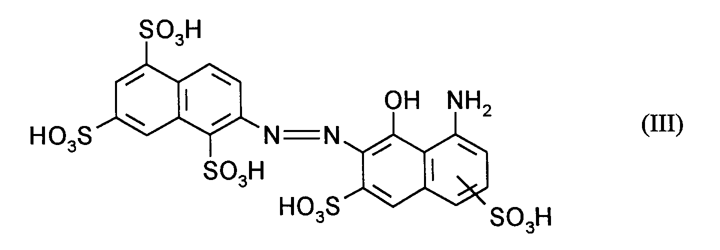 oder
2. durch Azokupplung eines Kondensationsproduktes der Formel 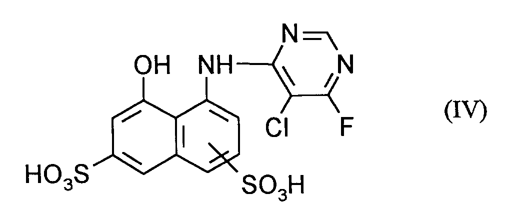 mit einer Diazoniumverbindung, die auf üblichem Wege aus dem Amin der allgemeinen Formel (V) erhalten wird 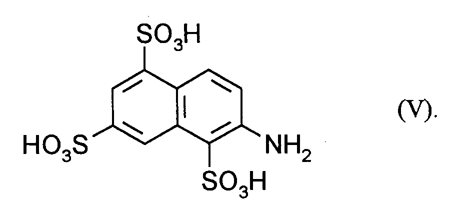 Reaktivkomponenten der allgemeinen Formel (II), z.B. 4,6-Difluor-5-chlorpyrimidin oder 4,5-Dichlor-6-fluorpyrimidin sind bekannt und beispielsweise aus 4,5,6-Trichlorpyrimidin durch Fluoridaustausch mit HF oder Alkalifluoriden in aprotischen Lösungsmitteln zu erhalten.

Die Kondensation mit Aminoazofarbstoffen der Formel (III) wird bevorzugt in wäßriger Lösung oder Suspension im pH-Bereich von 4-12 ausgeführt. Der freiwerdende Halogenwasserstoff wird durch Zugabe von wäßrigem Alkali, insbesondere Lithiumhydroxiden, -carbonaten oder -bicarbonaten abgestumpft.

Die Aminoazofarbstoffe der allgemeinen Formel (III) können auf üblichen Wegen durch Azokupplung von Diazoniumverbindungen aus dem Amin der allgemeinen Formel (V) mit Verbindungen der Formel (VI) erhalten werden, wobei die Bedingungen so gewählt werden, daß die Kupplung in o-Stellung zur OH-Gruppe der Kupplungskomponente (VI) 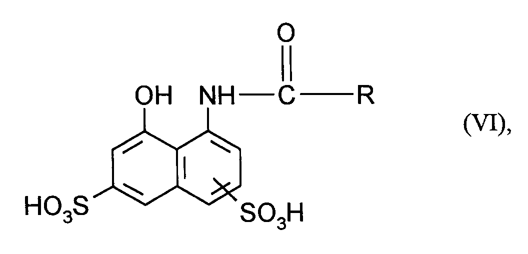
worin
- R: für einen gegebenenfalls substituierten aliphatischen oder aromatischen Rest steht,
erfolgt.

Der Acylrest -COR in (VI) wird im Anschluß an die Kupplung durch Erwärmen in saurem oder alkalischem Medium abgespalten.

Als Acylrest kommen insbesondere Formyl, Acetyl, Maleonyl, Carbamoyl oder Phthaloyl in Frage.

Die neuen Farbstoffe eignen sich zum Färben und Bedrucken von insbesondere Hydroxyl- und Amidgruppen enthaltenden Materialien, wie Textilfasern, -faden und -geweben aus Wolle, Seide und besonders zum Färben und Bedrucken von nativer oder regenerierter Cellulose, wobei die Behandlung von Cellulose-materialien zweckmäßigerweise in Gegenwart säurebindender Mittel und gegebenenfalls durch Hitzeeinwirkung nach den für Reaktivfarbstoffe bekanntgewordenen Verfahren erfolgt.

### Beispiel 1

31,9 g 1-Amino-8-hydroxynaphthalin-3,6-disulfonsäure werden in 175 ml Wasser mit Natronlauge versetzt. Nach Abkühlen auf 10°C werden in die Lösung 15,1 g 4,6-Difluor-5-chlorpyrimidin langsam eingetropft und dabei der pH-Wert bei 8,5 bis 9,0 gehalten. Man erhält eine Lösung des Acylierungsprodukts der Formel 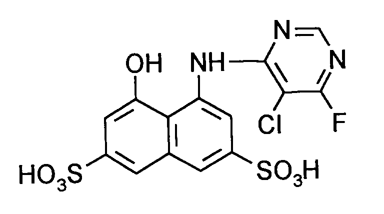
die so direkt zur Kupplung eingesetzt wird.

In die so erhaltene Kupplungslösung wird die auf üblichem Wege erhaltene Diazoniumsalzlösung aus 38,3 g 2-Aminonaphthalin-1,5,7-trisulfonsäure in verdünnter Salzsäure unter Eiskühlung eingerührt. Durch Zugabe von Natriumcarbonat wird ein pH-Wert von 7,0 bis 7,5 gehalten. Der Farbstoff wird ausgesalzen, abgesaugt und getrocknet. Der Farbstoff liegt dann als braunrotes Pulver vor und färbt Baumwolle in blaustichig roten Tönen. Es besitzt folgende Konstitution in Form der Säure:

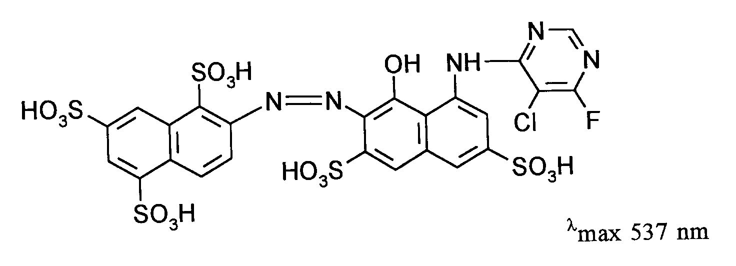

### Beispiel 2

71,3 g des Aminoazofarbstoffs der Formel 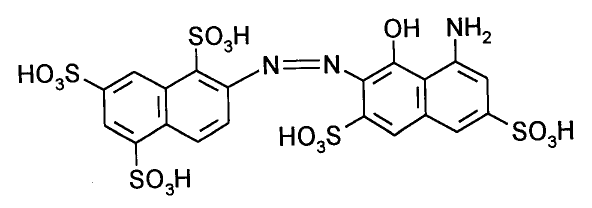
werden in 350 ml Wasser bei 60°C mit Natronlauge gelöst. In die so erhaltene Lösung gibt man bei 60°C 16,9 g (0,11 Mol) 4,6-Difluor-5-chlorpyrimidin, wobei der pH-Wert zwischen 5,5 und 6,0 gehalten wird. Nach ca. 3 Stunden ist die Kondensation beendet. Nach Zugabe von 250 ml Wasser wird der Farbstoff ausgesalzen. Der Farbstoff wird dann abgesaugt und getrocknet. Das Produkt liegt dann als rotbraunes Pulver vor, löst sich in Wasser mit tiefroter Farbe und färbt Baumwolle in blaustichig roten Tönen.

Es besitzt folgende Konstitution in Form der freien Säure:

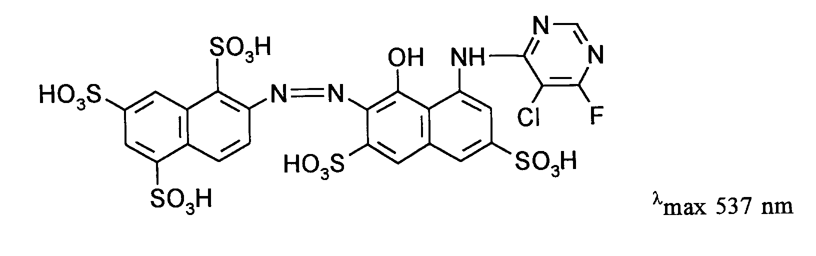

### Beispiel 3

31,9 g 1-Amino-8-hydroxynaphthalin-4,6-disulfonsäure werden in 175 ml Wasser mit Natronlauge gelöst. Nach Abkühlen auf 10°C werden in die Lösung 15,1 g 4,6-Difluor-5-chlorpyrimidin langsam eingetropft und dabei mit Natronlauge der pH-Wert bei 9,5 gehalten. Man erhält eine Lösung des Acylierungsprodukts der Formel 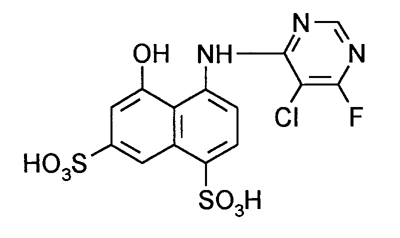
die so direkt zur Kupplung eingesetzt wird.

In die so erhaltene Kupplungslösung wird die auf üblichem Wege erhaltene Diazoniumsalzlösung aus 38,3 g 2-Aminonaphthalin-1,5,7-trisulfonsäure in verdünnter Salzsäure unter Eiskühlung eingerührt. Durch Zugabe von Natriumcarbonat wird ein pH-Wert von 7,0 bis 7,5 gehalten. Nach 1-stündigem Nachrühren wird der Farbstoff ausgesalzen, abgesaugt und getrocknet. Der Farbstoff liegt dann als braunrotes Pulver vor und färbt Baumwolle in roten Tönen. Es besitzt folgende Konstitution in Form der freien Säure:

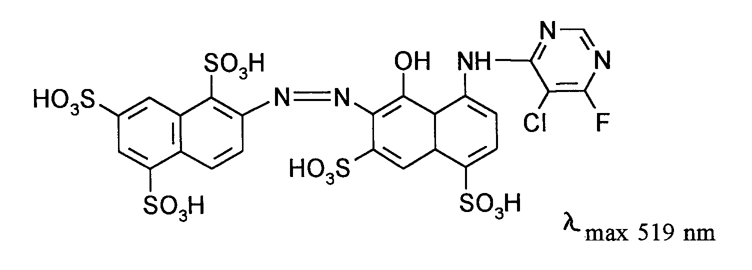

### Beispiel 4

71,3 g des Aminoazofarbstoffs der Formel 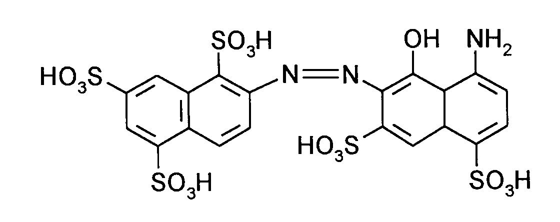
werden in 350 ml Wasser bei 60°C mit Natronlauge gelöst. In die so erhaltene Lösung gibt man bei 60°C 16,6 g (0,11 Mol) 4,6-Difluor-5-chlorpyrimidin, wobei der pH-Wert mit Sodalösung zwischen 5,5 und 6,0 gehalten wird. Nach ca. 3 Stunden ist die Kondensation beendet. Nach Zugabe von 250 ml Wasser wird der Farbstoff ausgesalzen. Der Farbstoff wird abgesaugt und getrocknet. Das Produkt liegt dann als rotbraunes Pulver vor, löst sich in Wasser mit tiefroter Farbe und färbt Baumwolle in roten Tönen.

Es besitzt folgende Konstitution in Form der freien Säure:

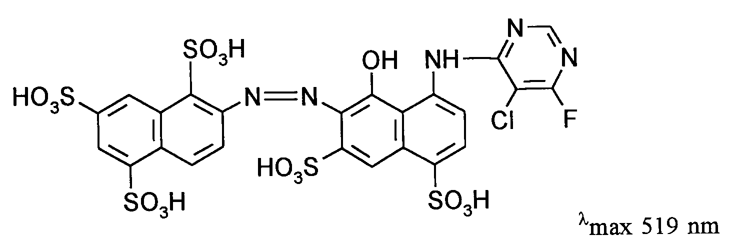

## Patentansprüche

1. Reaktivfarbstoffe, die in Form der freien Säure folgender Formel entsprechen

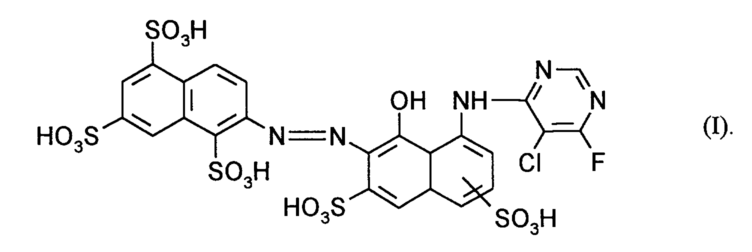

2. Reaktivfarbstoff, der in Form der freien Säure folgender Formel entspricht

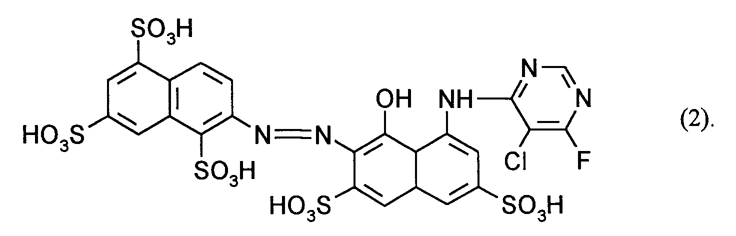

3. Reaktivfarbstoff, der in Form der freien Säure folgender Formel entspricht

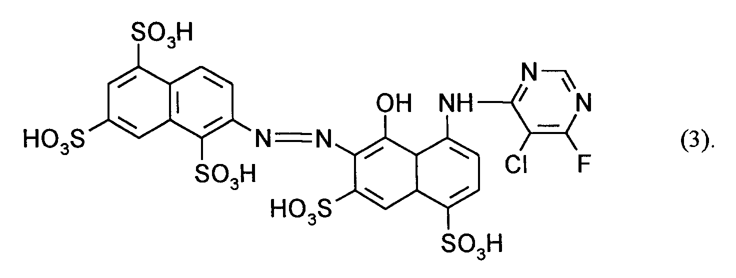

4. Verfahren zum Färben und Bedrucken von Fasermaterialien mit einem Farbstoff, dadurch gekennzeichnet, daß ein Farbstoff gemäß Anspruch 1 verwendet wird.

5. Verfahren gemäß Anspruch 4, dadurch gekennzeichnet, daß das Fasermateriäl Hydroxyl- und/oder Amidgruppen enthält.

6. Gewebe auf Basis von hydroxyl- und/oder amidgruppenhaltigen Materialien, dadurch gekennzeichnet, daß es mit einem Farbstoff gemäß Anspruch 1 gefärbt oder bedruckt worden ist.
